**Europäisches Patentamt**

**European Patent Office**

**Office européen des brevets**

(19)

(11) Veröffentlichungsnummer: **0 175 913**
**B1**

# (12) EUROPÄISCHE PATENTSCHRIFT

(45) Veröffentlichungstag der Patentschrift:
**14.12.88**

(21) Anmeldenummer: **85110276.4**

(22) Anmeldetag: **16.08.85**

(51) Int. Cl.⁴: **G 01 D 15/34,** G 01 D 15/08

(54) **Registrierstreifen für ein elektrisches Registriergerät.**

(30) Priorität: **24.08.84 DE 3431214**

(43) Veröffentlichungstag der Anmeldung:
**02.04.86 Patentblatt 86/14**

(45) Bekanntmachung des Hinweises auf die Patenterteilung:
**14.12.88 Patentblatt 88/50**

(84) Benannte Vertragsstaaten:
**AT CH DE FR IT LI NL**

(56) Entgegenhaltungen:
**US-A-4 358 779**

(73) Patentinhaber: **Siemens Aktiengesellschaft Berlin und München, Wittelsbacherplatz 2, D-8000 München 2 (DE)**

(72) Erfinder: **Knöller, Philipp- Martin, Finkenweg 8, D-7505 Ettlingen 3 (DE)**

## Beschreibung

Die Erfindung betrifft einen Registrierstreifen für ein elektrisches Registriergerät.

Es sind sogenannte Metallpapier-Registriergeräte bekannt (Siemens-Druckschrift "OSCILLOREG MO2001 - 80-Kanal-Impulsschreiber"), bei denen über die Schreibbreite eines Metallpapier-Registrierstreifens ein Kamm aus feststehenden Schreibelektroden angeordnet ist. An die Elektroden und die Metallbeschichtung des Registrierstreifens ist eine Spannung gelegt. Dadurch wird beim Ablauf des Registrierstreifens von jeder Elektrode aus dem Metallbelag eine sichtbare Schreibspur ausgebrannt. Mit der Zeit lagern sich an den einzelnen Elektroden Reste der abgebrannten Metallschicht an, die den Stromübergang zwischen Schreibelektrode und Metallschicht behindern. In verhältnismäßig kurzen Zeitabständen muß deshalb das Registriergerät abgeschaltet und der Elektrodenkamm gereinigt werden. Allgemein gesehen handelt es sich bei der Reinigung des Elektrodenkammes von Abbrandrückständen um eine von der Länge des durchgelaufenen Registrierstreifens abhängige Wartungsfunktion des Registriergerätes.

Aus der US-A-4 358 779 ist ein Registrierstreifen bekannt, bei dem durch den Einbau bestimmter Pigmente unterschiedlicher Korngröße auf der gesamten Oberfläche des Registrierstreifens eine gute Leserlichkeit erzielt und die Schreibelektrode in gewissem Abstand zur Registrierstreifenoberfläche gehalten wird, wodurch sich weniger Abbrandrückstände an der Schreibelektrode ablagern.

Der Erfindung lag die Aufgabe zugrunde, derartige Funktionen durch den Registrierstreifen selbst auszuüben oder mindestens auszulösen. Letzteres gilt beispielsweise von einem Alarmzeichen, das einen fälligen Austausch einer Registrierstreifenrolle ankündigt, wenn eine gerade in Betrieb befindliche Rolle nahezu abgelaufen ist.

Diese Aufgabe wird durch einen Registrierstreifen für ein elektrisches Registriergerät gemäß der Erfindung dadurch gelöst, daß mindestens ein Streifenabschnitt auf dem Registrierstreifen vorgesehen ist, der eine gegenüber dem für die Registrierung vorgesehenen Streifenteil unterschiedlich auf einen Schreibkamm oder dergleichen rückwirkende Oberfläche aufweist.

Der Schreibkamm oder auch ein anderes Schreibelement, das auf dem Registrierstreifen aufliegt, greift die Änderung der Registrierstreifenoberfläche ab und löst damit die gewünschte Funktion aus.

Der Streifenabschnitt kann dabei auf den Schreibkamm eine mechanische oder eine elektrische Rückwirkung ausüben.

Zur Reinigung des Schreibkammes von Rückständen des Abbrandes der Metallschicht eines Metallpapier-Registrierstreifens ist es zweckmäßig, daß der obengenannte Streifenabschnitt eine mit Schmirgelmaterial belegte Oberfläche aufweist.

Zur Anregung eines das bevorstehende Ablaufen einer Registrierstreifenrolle aus Metallpapier ankündigenden Alarmzeichens ist es zweckmäßig, daß der Streifenabschnitt eine gegenüber dem Schreibkamm isolierende Oberfläche besitzt. Andererseits ist es bei einem Registrierstreifen mit schwach oder nicht leitender Registrierfläche, beispielsweise einem wärmeempfindlichen Registrierstreifen, zweckmäßig, dem Streifenabschnitt zur Auslösung eines Alarmzeichens eine gut leitende Oberfläche zu geben.

Bei einem sehr langen Registrierstreifen kann es notwendig werden, Reinigungsfunktionen des Schreibkammes während des Ablaufs einer Rolle in gewissen Zeitabständen zu wiederholen. Dafür sind mehrere mit Schmirgelmaterial belegte Streifenabschnitte mit Vorteil gleichmäßig über die gesamte Länge eines Metallpapier-Registrierstreifens verteilt angeordnet.

Ein mit einer Schmirgeloberfläche ausgerüsteter Streifenabschnitt kann auf einem Metallpapier-Registrierstreifen durch Aufkleben eines Schmirgelpapierbandes quer über den Registrierstreifen hergestellt werden.

Es kann auch zweckmäßig sein, Schmirgelpulver auf einen mit Klebstoff versehenen Abschnitt des Registrierstreifens zu streuen.

Die elektrische Rückwirkung eines entsprechend gestalteten Streifenabschnittes auf den Schreibkamm oder dergleichen kann durch Unterbrechen oder Herstellen eines Stromkreises an der Kontaktstelle Schreibelektroden und Registrierstreifenoberfläche erfolgen.

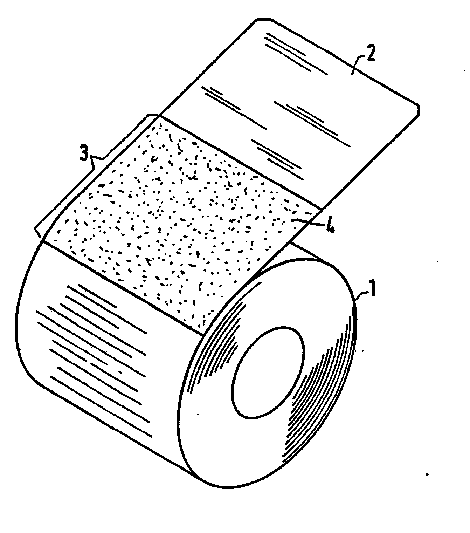

Die Erfindung wird an einer Figur verdeutlicht. Die Figur stellt eine Metallpapier-Registrierstreifenrolle 1 dar, deren eines Ende abgewickelt ist. Ein an das Ende 2 des Streifens anschließender Abschnitt 3 weist eine mit Schmirgelmaterial bedeckte Oberfläche 4 auf.

## Patentansprüche

1. Registrierstreifen für ein elektrisches Registriergerät, dadurch gekennzeichnet, daß mindestens ein Streifenabschnitt (3) auf dem Registrierstreifen (1) vorgesehen ist, der eine gegenüber dem für die Registrierung vorgesehenen Streifenteil unterschiedlich auf einen Schreibkamm oder dergleichen rückwirkende Oberfläche (4) aufweist.

2. Registrierstreifen nach Anspruch 1, dadurch gekennzeichnet, daß der Streifenabschnitt (3) bei einem Metallpapier-Registrierstreifen (1) eine mit Schmirgelpapier belegte Oberfläche (4) aufweist.

3. Registrierstreifen nach Anspruch 1 oder 2, dadurch gekennzeichnet, daß der Streifenabschnitt (3) eine isolierende Oberfläche aufweist.

3 **0175 913** 4

4. Registrierstreifen nach Anspruch 1, <u>dadurch gekennzeichnet</u>, daß der Streifenabschnitt (3) bei einem Registrierstreifen (1) mit schwach oder nicht leitender Registrierfläche eine gut leitende Oberfläche aufweist.

5. Registrierstreifen nach Anspruch 2, <u>dadurch gekennzeichnet</u>, daß mehrere mit Schmirgelmaterial belegte Streifenabschnitte (3) gleichmäßig über die gesamte Länge eines Metallpapier-Registrierstreifens (1) verteilt sind.

6. Registrierstreifen nach einem der Ansprüche 2 oder 5, <u>dadurch gekennzeichnet</u>, daß ein Schmirgelpapierband quer über den Registrierstreifen (1) geklebt ist.

7.. Registrierstreifen nach einem der Ansprüche 2 oder 5, <u>dadurch gekennzeichnet</u>, daß Schmirgelpulver auf einen mit Klebstoff versehenen Abschnitt (3) des Registrierstreifens (1) gestreut ist.

**Claims**

1. A recording strip for an electrical recording instrument, characterised in that at least one strip section (3) is provided on the recording strip (1) having a surface (4) which, compared with the strip part provided for the recording, affects a recording comb or the like differently.

2. A recording strip according to claim 1, characterised in that in the case of a metallized paper recording strip (1) the strip section (3) has a surface (4) covered with abrasive paper.

3. A recording strip according to claim 1 or claim 2, characterised in that the strip section (3) has an insulating surface.

4. A recording strip according to claim 1, characterised in that in the case of a recording strip (1) having a weakly or non-conducting recording surface the strip section (3) has a good conducting surface.

5. A recording strip according to claim 2, characterised in that a plurality of strip sections (3) covered with abrasive material are distributed uniformly over the whole length of a metallized paper recording strip (1).

6. A recording strip according to either one of claims 2 and 5, characterised in that an abrasive paper strip is stuck across the recording strip (1).

7. A recording strip according to either one of claims 2 and 5, characterised in that abrasive powder is scattered on a section (3) of the recording strip (1) provided with an adhesive.

**Revendications**

1. Bande d'enregistrement pour un appareil enregistreur électrique, caractérisée par la prévision sur la bande d'enregistrement (1) d'au moins un tronçon de bande (3) présentant une surface (4) qui réagit sur un peigne d'inscription ou analogue d'une manière qui diffère de celle de la partie de bande prévue pour l'enregistrement.

2. Bande selon la revendication 1, caractérisée en ce que le tronçon de bande (3) présente une surface (4) recouverte de papier d'émeri s'il s'agit d'une bande d'enregistrement en papier métallisé.

3. Bande selon la revendication 1 ou 2, caractérisée en ce que le tronçon de bande (3) présente une surface isolante.

4. Bande selon la revendication 1, caractérisée en ce que le tronçon de bande (3) présente une surface bonne conductrice s'il s'agit d'une bande d'enregistrement (1) ayant une surface d'enregistrement faiblement ou non conductrice.

5. Bande selon la revendication 2, caractérisée en ce que plusieurs tronçons de bande (3) recouverts de matériau abrasif sont répartis uniformément sur toute la longueur d'une bande d'enregistrement (1) en papier métallisé.

6. Bande selon la revendication 2 ou 5, caractérisée en ce qu'une bande de papier d'émeri est collée transversalement sur la bande d'enregistrement (1).

7. Bande selon la revendication 2 ou 5, caractérisée en ce qu'un tronçon (3) encollé de la bande d'enregistrement (1) est saupoudré de poudre d'émeri.

0 175 913